# EUROPÄISCHE PATENTSCHRIFT

(11) **EP 0 363 939 B1**
(45) Veröffentlichungstag und Bekanntmachung des Hinweises auf die Patenterteilung: **16.06.1993**
(21) Anmeldenummer: 89118913.6
(22) Anmeldetag: 11.10.1989
(51) Int. Cl.: F16H 19/00, F16H 9/12

(54) **Getriebe zum Umsetzen einer translatorischen Bewegung in eine Drehbewegung und umgekehrt**
Transmission for converting a reciprocating motion into a rotary motion and inversely
Transmission de conversion d'un mouvement rectiligne en un mouvement rotatif et inversement

(30) Priorität: 14.10.1988 DE 3835064
(43) Veröffentlichungstag der Anmeldung: 18.04.1990
(73) Patentinhaber: Schmid, Hans Armin, Dr., D-81675 München (DE)
(72) Erfinder: Schmid, Hans Armin, Dr., D-81675 München (DE)
(74) Vertreter: Strasser, Wolfgang, Dipl.-Phys

(56) Entgegenhaltungen:
- EP-A- 319 921
- DE-B- 1 180 599
- FR-A- 2 018 789
- US-A- 4 507 104
- US-A- 4 650 442

## Beschreibung

Die Erfindung betrifft ein Getriebe der im Oberbegriff des Anspruches 1 genannten Art.

Eine derartige Anordnung ist aus der gemäß Art. 54(3) EPÜ zum Stand der Technik zählenden EP-A-319 921 bekannt, die am 14106189 veröffentlicht wurde.

Bei üblichen Keilriemen-Getrieben wird anstelle eines bombierten Bandes ein Keilriemen verwendet, der üblicherweise die Form einer endlosen Schlaufe besitzt, die über zwei oder mehr Umlenkbereiche läuft. In jedem dieser Umlenkbereiche ist wenigstens eine Welle angeordnet, die jeweils gemeinsam mit zwei auf ihr drehfest montierten Scheiben, die zwischen sich den vom Keilriemen durchlaufenen Radialspalt einschließen, einen drehbaren Körper bilden, dessen Rotationsbewegung in eine translatorische Bewegung von Keilriemenabschnitten umgewandelt bzw. der durch die translatorische Bewegung der Keilriemenabschnitte in eine Drehbewegung versetzt wird.

Somit ist eine der Wellen im allgemeinen eine Antriebswelle, deren Drehung eine Linearbewegung desjenigen Trums der Keilriemenschlaufe bewirkt, das zu dieser Welle hingezogen wird. Die Linearbewegung dieses Keilriemen-Trums wird ihrerseits in dem oder den anderen Umlenkbereichen wieder jeweils in eine Drehbewegung der dort befindlichen Welle umgewandelt, die somit von der erstgenannten Welle indirekt angetrieben wird.

Es sei ausdrücklich betont, daß die vorliegende Erfindung nicht auf Getriebe mit einem zu einer endlosen Schlaufe geschlossenen langgestreckten Körper beschränkt ist. Es sind auch Getriebe denkbar, bei denen der langgestreckte Körper an seinen beiden Enden mit antreibenden oder anzutreibenden Einrichtungen verbunden ist, die mit ihm gemeinsam eine Hin- und Herbewegung in seiner Längsrichtung ausführen. Dabei steht der langgestreckte Körper in einem Bereich zwischen seinen Enden mit dem Radialspalt eines weiteren Körpers in Eingriff, der um eine Achse drehbar gelagert ist und eine entsprechende hin- und hergehende Drehbewegung ausführt. Bei diesem weiteren Körper kann es sich wie im Fall der endlosen Schlaufe um eine Welle mit drehfest montierten Scheiben handeln. Es sind aber auch beliebige andere Formen denkbar. Wesentlich ist, daß entweder der weitere Körper von der Linearbewegung des langgestreckten Körpers angetrieben wird oder diese antreibt. Die hin- und hergehende Drehbewegung des weiteren Körpers kann sich dabei über einen Winkel erstrecken, der größer, gleich oder kleiner als 360° ist. Im letzteren Fall muß sich der Radialspalt nicht über den vollen Umfang des weiteren Körpers erstrecken.

Auch dann, wenn der langgestreckte Körper nicht zu einer endlosen Schlaufe geschlossen ist, können zwischen seinen beiden Enden mehrere weitere Körper angeordnet sein, von denen jeder einen Radialspalt aufweist, durch den ein Abschnitt des langgestreckten Körpers so hindurchläuft, daß der langgestreckte Körper hier eine Umlenkung über einen vorgegebenen Winkelbereich erfährt.

Bei allen diesen Getrieben ist wesentlich, daß der Teil des langgestreckten Körpers, z.B. des Keilriemens, der momentan zur Kraft- bzw. Drehmomentübertragung dient, unter einer zusätzlichen Zugspannung steht, so daß er sich in diesem Bereich stärker dehnt als in den anderen Bereichen und überdies in den sich in radialer Richtung nach innen verjüngenden Radialspalt hineingezogen wird.

Hieraus ergibt sich folgendes:
Betrachtet man eine durch die Bewegung des Keilriemens angetriebene Welle, so stehen die Bereiche des Keilriemens, die auf der "Zuführseite" in den Radialspalt einlaufen, nicht unter der unmittelbaren Einwirkung der Antriebskraft und sind daher weniger gespannt als auf der gegenüberliegenden Seite der angetriebenen Welle, wo der Keilriemen von dieser Welle weg zur Antriebsvorrichtung hingezogen wird. Beim Übergang von dem weniger stark in den stärker gespannten Zustand muß der Keilriemen unter Aufwendung von Energie elastisch gespannt werden. Da das Material, aus dem Keilriemen hergestellt werden, eine hohe Hysterese der elastischen Verformung aufweist, kann diese Energie zum Teil nur in Form von Wärme wieder freigesetzt werden.

Außerdem läuft der Keilriemen auf der unter geringerem Zug stehenden Seite der Keilriemenscheibe einer angetriebenen Welle auf einem Radius in den Radialspalt ein, der größer ist als der Radius auf dem er den Radialspalt auf der stärker unter Zug stehenden Seite verläßt. Das bedeutet, daß der Keilriemen während des Übergangs von der einen auf die andere Seite des Radialspalts tiefer in den Radialspalt hineingezogen wird, was wegen der sich nach innen verjüngenden Keilform dieses Spaltes zu einer seitlichen Kompression des Keilriemens führt, die ebenfalls zum Teil in Wärme umgesetzt wird.

Zu den beiden zuvor genannten Formen des Energieverlustes durch Walkarbeit kommen noch Reibungsverluste hinzu, die zwischen den Seitenflächen des Keilriemens und den Seitenwänden des Radialspaltes entstehen, wenn der Keilriemen bei dem abschnittsweisen Übergang von dem Bereich geringerer Zugspannung in den Bereich erhöhter Zugspannung tiefer in den Radialspalt hineingezogen wird.

Entsprechendes gilt auch für den Radialspalt an der antreibenden Welle, nur daß hier die in den Radialspalt einlaufenden Teile des Keilriemens unter der erhöhten und die aus dem Radialspalt auslaufenden Teile unter der geringeren Zugspannung stehen.

Bei dem in der EP-A 319 921 beschriebenen Getriebe tritt an die Stelle des Keilriemens ein Band aus einem steifen Material, das quer zu seiner Längsrichtung bombiert, d.h. so elastisch vorgespannt ist, daß es in Querrichtung eine elastisch aufhebbare Wölbung besitzt. Dieses bombierte Band verläuft mit einem Abschnitt seiner Längserstreckung innerhalb des Radialspaltes, der sich hier anders als beim Keilriemengetriebe nach außen, d.h. von der Drehachse weg, verjüngt, und erfährt in diesem Radialspalt dadurch eine Richtungsänderung, daß es um eine in Querrichtung verlaufende Achse so stark gekrümmt wird, daß es in diesem Abschnitt in elastisch reversibler Weise seine Querkrümmung verliert und sich in Querrichtung streckt, wobei sich seine Seitenkanten bzw. Seitenflächen voneinander entfernen. In den vor bzw. hinter diesem um eine Querachse gekrümmten Abschnitt liegenden Bereichen, in denen das bombierte Band in Längsrichtung geradlinig verläuft, behält es seine Bombierungswölbung, d.h. die durch seine Vorbehandlung erzeugte Krümmung um eine in Band-Längsrichtung verlaufende Achse. Dabei ergeben sich kontinuierliche Übergänge zwischen diesen quer gekrümmten Bereichen und dem längs gekrümmten Abschnitt. Hebt man die Längskrümmung, d.h. die Krümmung um eine quer verlaufende Achse wieder auf, so kehrt das Band auch in diesem Bereich in seine ursprüngliche quer gekrümmte Form zurück.

In den in Längsrichtung gestreckten Bereichen besitzt ein solches Band wegen seiner Querwölbung in Längsrichtung eine äußerst hohe Drucksteifigkeit. Geht ein solcher in Längsrichtung gestreckter Bereich, wie er z.B. von jedem der Abschnitte eines bombierten Bandes gebildet wird, der an eines der beiden "freien" Enden eines nur in einem kurzen Zwischenbereich um eine Querachse umgelenkten Bandes anschließt, in den durch die Umlenkung entstehenden in Längsrichtung gekrümmten Zwischenbereich über, so kann dieser in Längsrichtung gestreckte Bereich auf den Umlenkbereich hin in starkem Maße druckbelastet werden, wenn das Band im Umlenkbereich so eingespannt und geführt wird, daß die in Längsrichtung wirkende Kraft im Umlenkbereich aufgenommen werden kann. Entsprechendes gilt für das obere bzw. untere Trum eines zu einer endlosen Schlaufe geschlossenen bombierten Bandes, das zwischen zwei oder mehr Umlenkbereichen umläuft.

Gemäß der EP-A-319 921 erfolgt das Umlenken und Einspannen des bombierten Bandes innerhalb des Radialspaltes dadurch, daß das bombierte Band so geführt wird, daß es sich zwangsweise an eine Anlagefläche anschmiegt, die in eindeutiger und unveränderlicher Weise den Radius bzw. die Radien der um eine Querachse erfolgenden Längskrümmung vorgibt. Dies hat zur Folge, daß sich die relative Längsbewegung eines jeden in den Radialspalt eintretenden Bandabschnittes in immer der gleichen Weise in eine Drehbewegung des den Radialspalt aufweisenden Körpers umsetzt und umgekehrt. Mit anderen Worten: Das Übersetzungsverhältnis einer solchen Getriebeanordnung ist für jeden Abschnitt des bombierten Bandes fest vorgegeben und kann nicht ohne weiteres verändert werden.

Demgegenüber liegt der Erfindung die Aufgabe zugrunde, ein Getriebe der eingangs genannten Art so weiterzubilden, daß sein Übersetzungsverhältnis auf einfache Weise veränderbar ist.

Zur Lösung dieser Aufgabe sieht die Erfindung die im Anspruch 1 zusammengefaßten Merkmale vor.

Bei der erfindungsgemäßen Anordnung erfolgt somit die Einspannung und Führung im Umlenkbereich ohne die Verwendung einer Anlagefläche ausschließlich dadurch, daß die sich auf den Radialspalt zubewegenden Teile des bombierten Bandes zu diesem hin ständig druckbelastet sind. Das bombierte Band kann dabei mit seinem in Längsrichtung gestreckten Bereich ohne weiteres in den Radialspalt eintreten, weil es hier wegen seiner Querwölbung eine kleinere Breite besitzt als wenn es in Querrichtung gestreckt ist. Da das bombierte Band im Radialspalt um eine quer verlaufende Achse umgelenkt wird, muß es dort seine Wölbung in Querrichtung aufgeben, wobei es sich in dieser Richtung streckt und sich der Abstand zwischen seinen Seitenkanten bis auf den bei völliger Streckung erreichbaren Maximalabstand vergrößert. Wegen der ständig in Längsrichtung auf den Radialspalt hin erfolgenden Druckbelastung spreizt sich das Band an den Seitenwänden des Radialspaltes bei dem radialen Abstand von der Umlenkachse ein, bei dem der axiale Abstand der Seitenwände gleich dem Maximalabstand der Band-Seitenflächen ist. Ein Ausweichen auf einen größeren radialen Abstand von der Umlenkachse ist nicht möglich, da sich der Radialspalt nach außen verjüngt. Ein Hinunterrutschen des Bandes auf einen geringeren radialen Abstand wird zumindest dann, wenn die Umlenkung nicht über einen sehr großen Winkelbereich erfolgt, mit Sicherheit durch die in Längsrichtung erfolgende Druckbelastung des Bandes verhindert.

Somit hängt der radiale Abstand von der Drehachse, in dem sich das in Querrichtung gestreckte Band zwischen den Seitenwänden des Radialspaltes einspreizt, von der axialen Weite dieses Radialspaltes ab. Da diese erfindungsgemäß verstellbar ist, kann der radiale Einspreizabstand und damit auch das Übersetzungsverhältnis des erfindungsgemäßen Getriebes auf einfache Weise geändert werden.

Bei Umlenkbereichen, die sich über einen größeren Winkel erstrecken, wird die Anordnung vorzugsweise dadurch selbsthemmend ausgebildet, daß der Tangens des Winkels, mit dem im Radialschnitt gesehen die Seitenwände des Radialspaltes gegen das Lot auf die Umlenkachse geneigt sind, kleiner/gleich dem Reibungskoeffizienten der von den Band-Seitenflächen und den Seitenwänden des Radialspalts gebildeten Reibpaarung gewählt wird. In diesem Fall zeigt das unter Längsdruckbelastung auf dem größtmöglichen Radius zwischen den Seitenwänden des Radialspalts eingespannte Band auch in den Abschnitten des Umlenkbereichs, in denen die Längs-Druckbelastung nicht mehr unmittelbar wirkt, keinerlei Tendenz, in den nach innen breiter werdenden Radialspalt auf einen kleineren Radius hinunterzurutschen.

Ein unter Längs-Druckbelastung in einen sich nach außen verjüngenden Radialspalt auf einen bestimmten Radius einlaufendes und im Radialspalt um eine Querachse umgelenktes bombiertes Band verläßt somit den Spalt auf genau demselben Radius, auf dem es in ihn eingelaufen ist.

Auf der Austrittsseite, auf der das bombierte Band nach erfolgter Umlenkung den Radialspalt wieder verläßt, erfolgen die oben beschriebenen Veränderungen der Bandbreite und der Band-Querschnittsform in umgekehrter Reihenfolge. Es findet also ein kontinuierlicher Übergang von dem in Querrichtung völlig gestreckten Zustand in den in Querrichtung gewölbten Zustand statt, wobei sich die Breite des bombierten Bandes bzw. der Abstand zwischen seinen Seitenflächen wieder verringert. Somit kann das Band ungestört aus dem Radialspalt austreten, obwohl sich dieser nach außen hin verjüngt.

Die soeben für einen statischen Zustand gemachten Aussagen gelten in entsprechender Weise für einen dynamischen Ablauf, beidem sich ständig neue Abschnitte des bombierten Bandes auf den Radialspalt zubewegen, in diesen eintreten, wobei sie in Querrichtung noch gekrümmt sind, sich dann aufgrund der zunehmenden Umlenkung in Querrichtung strecken, um sich in einem Wälzvorgang zwischen die Seitenwände des Radialspaltes einzuspannen, an denen sie in einem reinen Haftreibschluß über einen vorgegebenen Winkelbereich anliegen, um sich dann in einem weiteren Wälzvorgang wieder von den Seitenwänden abzulösen, sich in Querrichtung zu krümmen und sich schließlich aus dem Radialspalt herauszubewegen, wobei der den Radialspalt enthaltende Körper in entsprechender Weise gedreht wird.

Wesentlich ist dabei, daß keinerlei Gleitreibung auftritt und daß das bombierte Band aus einem Material, z.B. aus Metall oder Kunststoff hergestellt werden kann, dessen Hysterese bei der elastischen Verformung wesentlich geringer ist als die der Materialien, aus denen üblicherweise Keilriemen hergestellt werden. Somit sind also auch die durch Reibung und Walkarbeit auftretenden Energieverluste bei der erfindungsgemäßen Anordnung wesentlich geringer als beim Stand der Technik. Auch ist die Drucksteifigkeit eines bombierten Bandes aus Metall oder Kunststoff wesentlich höher als die Dehnungsfestigkeit der herkömmlichen Keilriemen, so daß von vornherein weniger Energie für elastische Verformungen aufgebracht werden muß.

Ein weiterer Vorteil der erfindungsgemäßen Anordnung ist darin zu sehen, daß das bombierte Band in den Bereichen, in denen es in seiner Längsrichtung gestreckt und in Querrichtung gekrümmt ist, eine hohe Formstabilität besitzt und dort allenfalls wie ein Stab, d.h. in wesentlich geringerem Ausmaß schwingt als ein gespannter Keilriemen, der wie eine Saite vibriert.

Außerdem ist eine erfindungsgemäße Anordnung selbstschützend. D.h., daß der Versuch, ein zu großes Drehmoment bzw. eine zu große Kraft zu übertragen, allenfalls zu einem reversiblen Abknicken bzw. Verkippen des bombierten Bandes führt, das in diesem Zustand dann keine weiteren Belastungen aufnimmt und somit vor einer Überbelastung geschützt ist, während sich ein Keilriemen in einem solchen Fall festklemmt und überdehnt wird bzw. reißt.

Bei bevorzugten Varianten der erfindungsgemäßen Anordnung ist vorgesehen, daß die beiden Seitenwände des Radialspaltes von zwei Körpern, beispielsweise Scheiben, gebildet werden, die während des Betriebs der Anordnung axial gegeneinander verschiebbar sind. Dadurch können die Weitenverhältnisse des Radialspaltes verändert und das den Spalt durchlaufende Band dazu gebracht werden, auf einen größeren oder einen kleineren radialen Abstand von der Drehachse auszuweichen, wenn die beiden Seitenwände voneinander weg oder aufeinander zugeschoben werden. Man erhält auf diese Weise ein stufenlos veränderbares Übersetzungsverhältnis entweder zwischen der Linearverschiebung eines bombierten Bandes mit "freien" Enden und dem oder den Drehwinkeln eines oder mehrerer weiterer Körper zwischen diesen beiden freien Enden oder zwischen den Drehgeschwindigkeiten von zwei oder mehr weiteren Körpern, deren Radialspalte von einem bombierten Band durchlaufen werden, das zu einer endlosen Schlaufe geschlossen ist.

Diese und weitere vorteilhafte Weiterbildungen der erfindungsgemäßen Anordnungen sind in den Unteransprüchen niedergelegt.

Die Erfindung wird im folgenden anhand von Ausführungsbeispielen unter Bezugnahme auf die Zeichnung beschrieben; in dieser zeigt:
- Fig. 1: in perspektivischer Ansicht eine erste Ausführungsform der erfindungsgemäßen Vorrichtung, bei der jedes der beiden Enden des bombierten Bandes mit einem sich in Längsrichtung des Bandes hin- und herbewegenden Körper verbunden sein kann,
- Fig. 2: einen Schnitt durch die Vorrichtung aus Fig. 1 längs einer in Fig. 1 vertikalen sich durch die Linie II-II erstreckenden Ebene, und
- Fig. 3: eine perspektivische Darstellung einer Ausführungsform, bei der das bombierte Band zu einer endlosen Schlaufe geschlossen ist, die zwischen zwei erfindungsgemäß ausgebildeten Radialspalten umläuft.

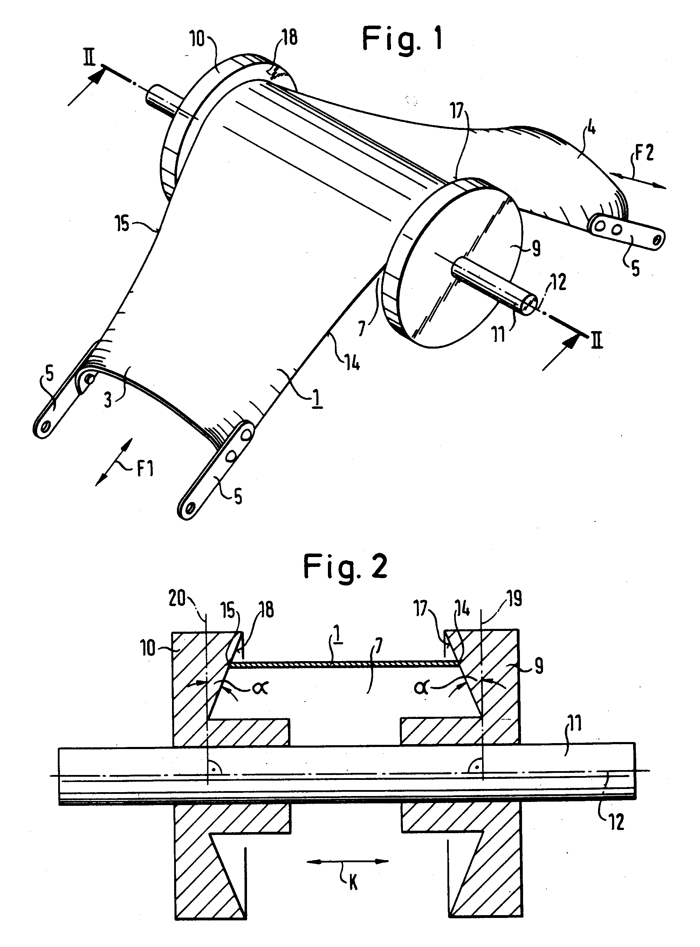

Bei der Ausführungsform gemäß Fig. 1 besitzt das quer zu seiner Längsrichtung bombierte Band 1 zwei "freie" Enden 3, 4, an denen es jeweils über Laschen 5 mit nicht dargestellten Körpern so verbunden ist, daß es sich gemeinsam mit diesen Körpern in Richtung seiner Längserstreckung translatorisch hin- und herbewegen kann.

In einem zwischen den beiden Enden 3, 4 liegenden Bereich durchläuft das Band 1 einen Radialspalt 7, der von zwei Scheiben 9, 10 begrenzt wird, die auf einer Welle 11 um eine Achse 12 drehbar gelagert sind. Dabei erstreckt sich die Welle 11 senkrecht zur Längsrichtung des bombierten Bandes 1.

Die beiden Scheiben 9, 10 sind im vorliegenden Fall mit der Welle 11 drehfest verbunden, so daß sie mit dieser eine gemeinsame Rotationsbewegung ausführen.

Im Bereich des Radialspaltes 7 ist das bombierte Band 1 um eine quer zu seiner Längsrichtung verlaufende Achse, die hier mit der Achse 12 zusammenfällt, abgebogen, wobei der Krümmungsradius dieser Biegung größer gleich dem Radius ist, mit dem das Band in Querrichtung bombiert ist.

Diese Anordnung hat zur Folge, daß die durch die Doppelpfeile F1 und F2 angedeuteten Richtungen der Hin- und Herbewegung der beiden Enden 3, 4 des bombierten Bandes 1 in der Längs-Mittelebene des bombierten Bandes 1 miteinander einen von 180° verschiedenen Winkel einschließen.

Die im Bereich des Radialspaltes 7 vorhandene Krümmung des bombierten Bandes 1 um eine sich in seiner Querrichtung erstreckende Achse hat zur Folge, daß in diesem Bereich in elastisch reversibler Weise die Bombierung des Bandes 1 aufgehoben wird, so daß sich das Band hier zwischen seinen Seitenflächen 14, 15 geradlinig erstreckt, wie man dies insbesondere der Fig. 2 entnehmen kann.

Demgegenüber ist das bombierte Band 1 in den Bereichen, in denen es quer zu seiner Längsrichtung keine Krümmung aufweist, aufgrund seiner Bombierung um eine zu seiner Längsrichtung parallele Achse gekrümmt, so daß es dort zwischen seinen Seitenflächen 14 und 15 einen bogenförmigen Verlauf besitzt, wie dies insbesondere an den Enden 3 und 4 des bombierten Bandes in 1 in Fig. 1 zu sehen ist.

Das bombierte Band nimmt also in seinen verschiedenen Abschnitten drei unterschiedliche Zustandsformen ein. In der ersten dieser Zustandsformen ist es in Längsrichtung gerade gestreckt und gleichzeitig in Querrichtung gekrümmt. In der zweiten Zustandsform erfolgt ein kontinuierlicher Übergang von der eben beschriebenen ersten Zustandsform zur dritten Zustandsform, in der das bombierte Band in Längsrichtung gekrümmt und dafür in Querrichtung geradegestreckt ist.

Bei der in Längsrichtung erfolgenden Hin- und Herbewegung des bombierten Bandes 1 befinden sich Bandabschnitte, die genügend weit vom Radialspalt 7 entfernt sind, in der ersten Zustandsform, um bei ihrer Annäherung an den Umlenkbereich erst in die zweite und dann, wenn sie sich im Umlenkbereich befinden, in die dritte Zustandsform überzugehen. Bei diesen Übergängen erfolgt eine zunehmende Verbreiterung des bombierten Bandes 1, dessen Seitenflächen 14, 15 in der ersten Zustandsform längs der freien Sehne des vom bombierten Band gebildeten Bogens gemessen ihren geringsten Abstand und in der dritten Zustandsform ihren größten Abstand aufweisen.

Wie man insbesondere der Fig. 2 entnimmt, ist die Weite des Radialspaltes 7 in dem radialen Bereich, in dem sich das bombierte Band 1 befindet, gerade so groß, daß sich das in Querrichtung gestreckte bombierte Band 1 mit seinen Seitenflächen 14, 15 in einem Haftreibungsschluß zwischen die Seitenwände 17, 18 des Radialspaltes 7 einspannen kann.

Wegen der eben beschriebenen Breiten-Vergrößerung beim Übergang von der ersten in die zweite und von der zweiten in die dritte Zustandsform können die bei der Hin- und Herbewegung des bombierten Bandes 1 sich auf den Radialspalt 7 zubewegenden Bandabschnitte bequem in diesen eintreten und sich erst dann mit ihren Seitenflächen 14, 15 an seine Seitenwände 17, 18 anpressen, obwohl sich der Querschnitt des Radialspaltes 7, wie in Fig. 2 dargestellt, von der Welle 11 weg radial nach außen verjüngt. Diese Verjüngung stellt sicher, daß das in Querrichtung gestreckte bombierte Band 1, dessen sich zum Radialspalt 7 hin bewegender Abschnitt unter einer zum Radialspalt 7 hin gerichteten Druckbelastung steht, sich aufgrund dieser Druckbelastung in radialer Richtung nicht beliebig weit von der Welle 11 entfernen kann. Vielmehr nimmt der im Radialspalt 7 befindliche Teil des bombierten Bandes immer gerade den radialen Abstand von der Welle 11 ein, in dem der Abstand der Seitenwände 17, 18 gleich der Breite des in Querrichtung gestreckten bombierten Bandes 1 ist.

Die aufgrund der Hin- und Herbewegung aus dem Radialspalt 7 austretenden Abschnitte des bombierten Bandes 1 gehen aus der dritten Zustandsform zunächst in die zweite und dann in die erste Zustandsform über, wobei sich der Abstand der Band-Seitenflächen 14, 15 wieder so stark verringert, daß die radial nach außen hin erfolgende Verengung des Radialspaltes 7 zu keinen Störungen führt.

Wesentlich ist, daß sowohl beim Eintreten als auch beim Austreten der Bandabschnitte das Anschmiegen bzw. Ablösen der Band-Seitenflächen 14, 15 an die Seitenwände 17, 18 bzw. von den Seitenwänden 17, 18 in Form einer Wälzbewegung stattfindet, bei der so gut wie keine Gleitreibung auftritt.

Wählt man überdies den Tangens des Winkels α, den jede der beiden Seitenwände 17, 18 mit dem entsprechenden Lot 19, 20 auf die Achse 12 einschließt, kleiner gleich dem Reibungskoeffizienten der Reibpaarung zwischen den Seitenflächen 14 bzw. 15 und der zugehörigen Seitenwand 17 bzw. 18, so erhält man eine selbsthemmende Anordnung, d.h., das bombierte Band 1 zeigt auch in den Bereichen des Radialspaltes 7, wo die vom Ende her erfolgende Druckbelastung in Längsrichtung nicht mehr unmittelbar wirken kann, keinerlei Tendenz, in den zur Welle 11 hin breiter werdenden Radialspalt 7 hineinzurutschen. Mit anderen Worten: die aus dem Radialspalt 7 austretenden Abschnitte des bombierten Bandes 1 verlassen den Radialspalt 7 auf genau dem Radius, auf dem sie auf der gegenüberliegenden Seite in den Radialspalt 7 eingetreten sind. Somit tritt also auch in den Bereichen, in denen die Seitenflächen 14, 15 die Seitenwände 17, 18 berühren, keinerlei Gleitreibung auf.

Da überdies das bombierte Band 1 aus einem steifen Material mit einer sehr geringen Elastizitäts-Hysterese hergestellt ist, sind die Walkverluste äußerst gering, die bei der Verformung der einzelnen Bandabschnitte beim Übergang von der ersten in die zweite, von der zweiten in die dritte, von dieser dann wieder in die zweite und schließlich wieder in die erste Zustandsform auftreten. Somit erhält man insgesamt also eine Anordnung mit äußerst geringen Reibungs-und Walkarbeits-Energieverlusten.

Alle diese Ausführungen gelten unabhängig davon, ob die antreibende Kraft von einem oder beiden der mit den "freien" Enden 3, 4 des bombierten Bandes 1 verbundenen Körpern oder von der Welle 11 ausgeht. Die Vorrichtung ist also gleichermaßen geeignet, eine lineare Hin- und Herbewegung der nicht dargestellten Körper und des Bandes 1 in eine Drehbewegung der Welle 11 umzusetzen, als auch eine Drehbewegung dieser Welle in eine entsprechende Linearbewegung zu verwandeln.

Lagert man die Scheiben 9, 10 auf der Welle 11 so, daß sie in axialer Richtung, d.h. in Richtung des Doppelpfeiles K aus Fig. 2 gegeneinander verschiebbar sind, so kann durch die damit verbundene Veränderbarkeit der axialen Weite des Radialspaltes 7 das Übersetzungsverhältnis der Anordnung, d.h. der von der Welle 11 bei einer vorgegebenen Linearverschiebung des bombierten Bandes 1 durchlaufene Drehwinkel bzw. umgekehrt, verändert werden.

Verbreitert man den in Fig. 2 dargestellten Radialspalt 7 durch eine derartige Axialverschiebung wenigstens einer der beiden Scheiben 9, 10, so bewegen sich die in den Radialspalt 7 einlaufenden Teile des bombierten Bandes 1, das auf den Radialspalt 7 hin druckbelastet ist, in radialer Richtung so weit nach außen, bis die Seitenflächen 14, 15 des geradlinig gestreckten bombierten Bandes wieder an den Seitenwänden 17, 18 des Radialspaltes 7 zur Anlage kommen und sich zwischen diesen Seitenflächen einspannen können. Dies hat zur Folge, daß bei einer gegebenen Linearverschiebungsweite des bombierten Bandes 1 in seiner Längsrichtung die Welle 11 einen kleineren Drehwinkel durchläuft als bei der in Fig. 1 gezeigten Stellung.

Verringert man umgekehrt die axiale Weite des Radialspaltes 7, so müssen die sich auf den Radialspalt zu bewegenden Abschnitte des bombierten Bandes 1 in den Radialspalt auf einem näher bei der Welle 11 liegenden Radius einlaufen, was zur Folge hat, daß die Welle 11 bei vorgegebener Linearverschiebung einen größeren Drehwinkel durchläuft.

Um eine Umsetzung der Linearbewegung des bombierten Bandes 1 in eine Drehbewegung der Welle 11 oder umgekehrt zu erzielen, genügt es im Prinzip, wenn eine der beiden Scheiben 9, 10 mit der Welle 11 drehfest verbunden und die andere der beiden Scheiben auf dieser Welle frei drehbar gelagert ist. Eine solche Anordnung weist eine größere Toleranz gegen leichte Verkantungen des bombierten Bandes 1 auf, wenn dessen Längsrichtung auf der Achse 12 nicht exakt senkrecht steht.

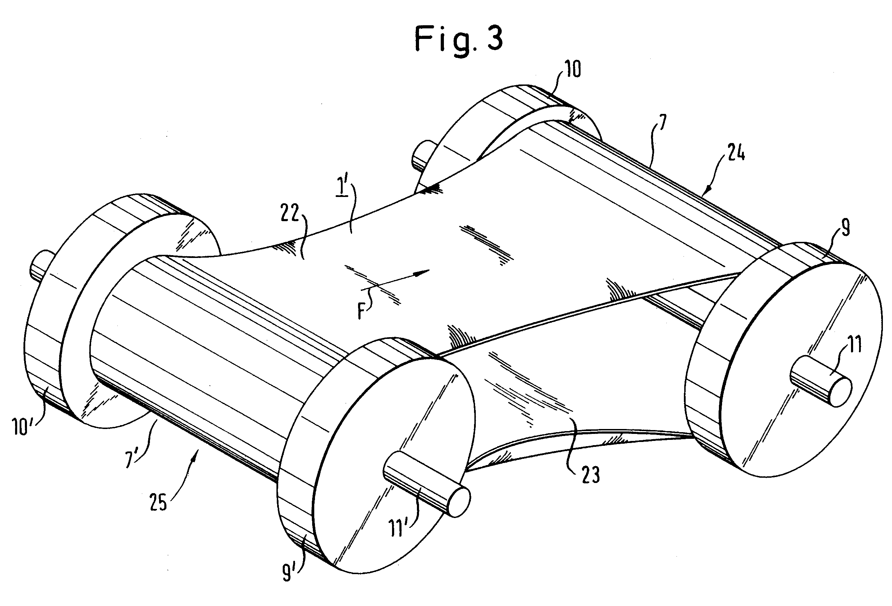

In Fig. 3 ist ein Ausführungsbeispiel einer erfindungsgemäßen Anordnung in perspektivischer Ansicht wiedergegeben, bei der das bombierte Band 1′ zu einer endlosen Schlaufe mit einem oberen Trum 22 und einem unteren Trum 23 geschlossen ist, die zwischen zwei Umlenkbereichen 24, 25 beispielsweise in Richtung des Pfeiles F umläuft. Das Zentrum eines jeden der beiden Umlenkbereiche 24, 25 bildet eine Welle 11 bzw. 11′. Auf jeder der beiden Wellen 11, 11′ sind zwei Scheiben 9, 10 bzw. 9′, 10′ montiert, die zwischen sich einen Radialspalt 7 bzw. 7′ einschließen, dessen Querschnitt sich in der unter Bezugnahme auf die Fig. 1 und 2 beschriebenen Weise radial nach außen verjüngt. Mit dieser Anordnung kann also ein Drehmoment von der Welle 11 auf die Welle 11′ bzw. umgekehrt übertragen werden. Sind die Weiten der Radialspalte 7, 7′ unterschiedlich gewählt, so wird das bombierte Band 1′ im Radialspalt 7 mit einem radialen Abstand von der Welle 11 umgelenkt, der vom radialen Abstand des bombierten Bandes 1′ von der Welle 11′ im Radialspalt 7′ verschieden ist, d.h. es ergibt sich ein von 1 verschiedenes Übersetzungsverhältnis zwischen den Drehgeschwindigkeiten der Wellen 11 und 11′.

Gestaltet man den Abstand eines oder beider Scheibenpaare 9, 10 bzw. 9′, 10′ veränderlich, wie dies oben bereits bei dem Ausführungsbeispiel der Fig. 1 und 2 geschildert wurde, so erhält man bei der Ausführungsform nach Fig. 3 eine Getriebeanordnung mit stufenlos verstellbarer Überbzw. Untersetzung. Dabei können die axialen Weiten der Radialspalte 7, 7′ entweder gegenläufig gesteuert werden, so daß das bombierte Band 1′ in dem einen der beiden Radialspalte in dem Maß nach innen wandert, in dem es sich in dem anderen Radialspalt nach außen bewegt. Alternativ hierzu kann die axiale Weite nur eines der beiden Radialspalte veränderlich sein und die Verschiebungsbewegung des bombierten Bandes 1′, die bei einer Variation der axialen Weite dieses Radialspaltes auftritt, durch eine Änderung des Abstandes zwischen den beiden Wellen 11 und 11′ kompensiert werden.

Im Gegensatz zu den herkömmlichen Keilriemen-Getriebeanordnungen, in denen der Keilriemen einer Zugbelastung unterworfen wird, ist bei all den genannten Anwendungsformen der erfindungsgemäßen Anordnung das bombierte Band 1 bzw. 1′ in Längsrichtung druckbelastet.

Zwar sind in den Fig. 1 bis 3 nur Ausführungsformen wiedergegeben, bei dem jeder der beiden Radialspalte 7 bzw. 7′ nur von einem einzigen bombierten Band 1 bzw. 1′ durchlaufen wird. Darüber hinaus sind erfindungsgemäß aber auch Anordnungen möglich, bei denen mehrere bombierte Bänder entweder mit "freien" Enden wie in den Fig. 1 und 2 oder in Form von endlosen Schlaufen wie in Fig. 3 einen einzigen Radialspalt mit verschiedenen radialen Abständen zur betreffenden Rotationsachse durchlaufen. Solche Anordnungen können beispielsweise dazu verwendet werden, um Drehmomente zu übertragen, für deren Bewältigung ein einziges bombiertes Band nicht mehr ausreicht. In diesem Fall werden dann die Breiten der bombierten Bänder so auf die axialen Weiten der von ihnen durchlaufenen Radialspalte abgestimmt, daß sie alle dasselbe Übersetzungsverhältnis bewirken.

Eine andere Möglichkeit besteht darin, bei einer der Fig. 3 ähnlichen Anordnung auf der einen der beiden Wellen koaxial einen radial weiter innen liegenden und einen radial weiter außen liegenden Radialspalt vorzusehen, die von zwei frei gegeneinander drehbaren Scheibenpaaren begrenzt werden. Jeder dieser beiden Radialspalte kann dann zur Umlenkung eines bombierten Bandes verwendet werden. Auf der gegenüberliegenden Seite können die beiden bombierten Bänder ein- und denselben Radialspalt auf geringfügig unterschiedlichen Radien durchlaufen. Man erhält auf diese Weise eine Differential-Getriebeanordnung mit sehr großem Über- bzw. Untersetzungsverhältnis.

Die eben geschilderten Anordnungen lassen sich erfindungsgemäß auch auf mehr als zwei bombierte Bänder bzw. eine größere Anzahl von zueinander koaxialen Radialspalten ausdehnen.

Das Material, aus dem die bombierten Bänder hergestellt werden, kann ein Metall oder ein Kunststoff sein. Wesentlich ist, daß dieses Material die für die Bombierung erforderliche Steifigkeit besitzt und mit einer möglichst geringen Hysterese elastisch verformbar ist.

Die Breite des bombierten Bandes kann sowohl bei der "offenen" Form gemäß Fig. 1 und 2 als auch bei der geschlossenen Form gemäß Fig. 3 über die Länge des Bandes hinweg variieren. Man erhält dann ein Übersetzungsverhältnis, das sich in Abhängigkeit davon ändert, welche Abschnitte des Bandes gerade den oder die Radialspalte durchlaufen.

Im allgemeinen wird man die Seitenwände 17, 18 des Radialspaltes 7 gegen die Lote 19, 20 unter einem einheitlichen Winkel α neigen, so daß der Radialspalt den in Fig. 2 gezeigten konischen Querschnittsverlauf besitzt. Will man aber dann, wenn der axiale Abstand zwischen den beiden Radialspalt-Seitenwänden 17, 18 während des Betriebes veränderbar ist, eine spezielle Änderungscharakteristik des Übersetzungsverhältnisses erzielen, so können zu diesem Zweck die Seitenwände 17, 18 im Radialschnitt auch vom geradlinigen Verlauf abweichende Kurven bilden. Darüber hinaus ist es insbesondere bei der in den Fig. 1 und 2 dargestellten "offenen" Form möglich, die Querschnittsform des Radialspaltes 7 in Abhängigkeit vom Drehwinkel um die Achse 12 zu variieren.

Die Achsen, um die die beiden ein und denselben Radialspalt begrenzenden Scheiben drehbar sind, müssen nicht notwendigerweise miteinander fluchten. Sie können zueinander versetzt parallel oder gegeneinander verkippt angeordnet werden. Hierdurch wird es möglich, einen schiefen Einlauf des bombierten Bandes in den Radialspalt auszugleichen.

## Patentansprüche

1. Getriebe mit wenigstens einem um eine Drehachse (12) drehbaren Körper (9, 10, 11; 9, 10, 11, 9', 10', 11'), der einen sich zumindest über einen Teil des Umfangs des Körpers (9, 10, 11; 9, 10, 11, 9', 10', 11') erstreckenden Radialspalt (7; 7, 7') aufweist, dessen Querschnitt sich von der Drehachse (12) weg nach außen verjüngt, und mit wenigstens einem quer zu seiner Längsrichtung bombierten Band (1; 1') aus einem steifen, elastisch verformbaren Material, wobei zur Umsetzung einer Drehbewegung des drehbaren Körpers (9, 10, 11; 9, 10, 11, 9', 10', 11') in eine relativ zu diesem Körper (9, 10, 11; 9, 10, 11, 9', 10', 11') erfolgende translatorische Bewegung des bombierten Bandes (1; 1') oder umgekehrt aufeinanderfolgende Abschnitte des bombierten Bandes (1; 1') in den Radialspalt (7; 7, 7') eintreten, über einen vorgebbaren Winkelbereich, in dem das bombierte Band (1; 1') so geführt ist, daß es eine Richtungsänderung erfährt, wobei die Seitenflächen (14, 15) der Abschnitte des bombierten Bandes an den Seitenwänden (17, 19) des Radialspaltes (7; 7, 7') reibschlüssig zur Kraftübertragung anliegen und dann wieder aus dem Radialspalt (7; 7, 7') austreten, dadurch **gekennzeichnet,** daß zumindest der sich jeweils auf den Radialspalt (7; 7, 7') zubewegende Teil des bombierten Bandes (1; 1') ständig in Längsrichtung zum Radialspalt (7; 7, 7') hin druckbelastet ist, und daß die axiale Weite des Radialspaltes (7; 7, 7') verstellbar ist.

2. Getriebe nach Anspruch 1, dadurch **gekennzeichnet,** daß der Tangens des Winkels (α), unter dem jede der Seitenwände (17, 18) des Radialspalts (7; 7, 7′) gegen das Lot (19, 20) auf die Drehachse (12) des drehbaren Körpers (11; 11, 11′) geneigt ist, kleiner gleich dem Reibungskoeffizienten der Reibpaarung zwischen den Seitenflächen (14, 15) des bombierten Bandes (1; 1, 1′) und den Seitenwänden (17, 18) des Radialspaltes (7; 7, 7′) ist.

3. Getriebe nach Anspruch 1 oder 2, dadurch **gekennzeichnet,** daß die axiale Weite des Radialspaltes (7; 7, 7′) während des Betriebs der Anordnung verstellbar ist.

4. Getriebe nach einem der vorhergehenden Ansprüche, dadurch **gekennzeichnet,** daß sich die Breite des bombierten Bandes (1; 1′) über dessen Länge ändert.

5. Getriebe nach einem der vorhergehenden Ansprüche, dadurch **gekennzeichnet,** daß der Radialspalt (7; 7, 7′) von zwei Scheiben (9, 10; 9′, 10′) begrenzt wird.

6. Getriebe nach Anspruch 5, dadurch **gekennzeichnet,** daß die beiden Scheiben um zwei miteinander nicht fluchtende Achsen drehbar sind.

7. Getriebe nach Anspruch 5 oder 6, dadurch **gekennzeichnet,** daß die eine der beiden Scheiben (9, 10; 9′, 10′) gegen die andere frei drehbar gelagert ist.

8. Getriebe nach einem der vorhergehenden Ansprüche, dadurch **gekennzeichnet,** daß das bombierte Band (1′) zu einer endlosen Schlaufe geschlossen ist.

9. Getriebe nach Anspruch 8, dadurch **gekennzeichnet,** daß die endlose Schlaufe eine langgestreckte Form mit zwei Umlenkbereichen (24, 25) und einem oberen (22) und einem unteren (23) Trum aufweist, die die beiden Umlenkbereiche miteinander verbinden.

10. Getriebe nach Anspruch 9, dadurch **gekennzeichnet,** daß das bombierte Band (1′) in jedem der Umlenkbereiche (24, 25) einen Radialspalt (7, 7′) durchläuft, dessen Querschnitt sich von der Achse der zugehörigen Welle (11, 11′) weg nach außen verjüngt.

11. Getriebe nach Anspruch 10, dadurch **gekennzeichnet,** daß der Abstand zwischen den jeweils das Zentrum eines jeden Umlenkbereiches (24, 25) bildenden Wellen (11, 11′) während des Betriebs verstellbar ist.

12. Getriebe nach Anspruch 10 oder 11, dadurch **gekennzeichnet,** daß die axialen Weiten der Radialspalte (7, 7′) während des Betriebs in aufeinander abgestimmter Weise verstellbar sind.

13. Getriebe nach einem der vorhergehenden Ansprüche, dadurch **gekennzeichnet,** daß mehrere bombierte Bänder ein und denselben Radialspalt auf verschiedenen Radien durchlaufen.

14. Getriebe nach einem der vorhergehenden Ansprüche, dadurch **gekennzeichnet,** daß der Radialspalt (7; 7, 7′) einen sich nach außen konisch verjüngenden Querschnitt aufweist.

15. Getriebe nach Anspruch 13, dadurch **gekennzeichnet,** daß der Verlauf der axialen Weite des Radialspalts und die Breiten der bombierten Bänder so aufeinander abgestimmt sind, daß die Bänder alle dasselbe Übersetzungsverhältnis aufweisen.

16. Getriebe nach einem der vorhergehenden Ansprüche, dadurch **gekennzeichnet,** daß wenigstens zwei drehbare Körper zu einer gemeinsamen Drehachse konzentrisch und gegeneinander frei verdrehbar angeordnet sind, von denen jeder wenigstens einen Radialspalt mit sich nach außen verjüngendem Querschnitt aufweist, der von einem bombierten Band durchlaufen wird.

## Claims

1. A transmission comprising at least one body (9, 10, 11; 9, 10, 11, 9', 10', 11') which is rotatable about an axis of rotation (12) and which has a radial gap (7; 7, 7'), the radial gap extending at least over a part of the periphery of the body (9, 10, 11; 9, 10, 11, 9', 10', 11') and the cross-section of the radial gap decreasing outwardly away from the axis of rotation (12), and at least one belt (1; 1') which is cambered transversely to its longitudinal direction and which comprises a stiff, resiliently deformable material, wherein for conversion of a rotary movement of the rotatable body (9, 10, 11; 9, 10, 11, 9', 10', 11') into a translatory movement of the cambered belt (1; 1'), which translatory movement occurs relative to said body (9, 10, 11; 9, 10, 11, 9', 10', 11'), or vice-versa, successive portions of the cambered belt (1; 1') pass into the radial gap (7; 7, 7'), over a predeterminable angular region in which the cambered belt (1; 1') is so guided that it experiences a change in direction, the side faces (14, 15) of the portions of the cambered belt bearing in frictional engagement against the side walls (17, 19) of the radial gap (7; 7, 7') for the transmission of force, and then come out of the radial gap (7; 7, 7') again, characterised in that at least the part of the cambered belt (1; 1') which is respectively moving towards the radial gap (7; 7, 7') is constantly loaded by a pressure in the longitudinal direction towards the radial gap (7; 7, 7') and that the axial width of the radial gap (7; 7, 7') is adjustable.

2. A transmission according to claim 1 characterised in that the tangent of the angle (α) at which each of the side walls (17, 18) of the radial gap (7; 7, 7') is inclined relative to the line (19, 20) perpendicular to the axis of rotation (12) of the rotatable body (11; 11, 11') is smaller than or equal to the coefficient of friction of the frictional pairing between the side faces (14, 15) of the cambered belt (1; 1, 1') and the side walls (17, 18) of the radial gap (7; 7, 7').

3. A transmission according to claim 1 or claim 2 characterised in that the axial width of the radial gap (7; 7, 7') is adjustable during operation of the arrangement.

4. A transmission according to one of the preceding claims characterised in that the width of the cambered belt (1; 1') changes over its length.

5. A transmission according to one of the preceding claims characterised in that the radial gap (7; 7, 7') is defined by two discs (9, 10; 9', 10').

6. A transmission according to claim 5 characterised in that the two discs are rotatable about two axes which are not aligned with each other.

7. A transmission according to claim 5 or claim 6 characterised in that one of the two discs (9, 10; 9', 10') is mounted freely rotatably relative to the other.

8. A transmission according to one of the preceding claims characterised in that the cambered belt (1') is closed to form an endless loop.

9. A transmission according to claim 8 characterised in that the endless loop is of an elongated form with two direction-changing regions (24, 25) and has an upper run (22) and a lower run (23) which connect the two direction-changing regions together.

10. A transmission according to claim 9 characterised in that in each of the direction-changing regions (24, 25) the cambered belt (1') runs through a radial gap (7, 7') whose cross-section decreases outwardly away from the axis of the associated shaft (11, 11').

11. A transmission according to claim 10 characterised in that the spacing between the shafts (11, 11') respectively forming the centre of each direction-changing region (24, 25) is adjustable during operation.

12. A transmission according to claim 10 or claim 11 characterised in that the axial widths of the radial gaps (7, 7') are adjustable during operation in mutually adapted fashion.

13. A transmission according to one of the preceding claims characterised in that a plurality of cambered belts pass through one and the same radial gap at different radii.

14. A transmission according to one of the preceding claims characterised in that the radial gap (7; 7, 7') is of a cross-section which decreases in a tapering configuration outwardly.

15. A transmission according to claim 13 characterised in that the variation in the axial width of the radial gap and the widths of the cambered belts are so adapted to each other that the belts all have the same transmission ratio.

16. A transmission according to one of the preceding claims characterised in that at least two rotatable bodies are arranged concentrically relative to a common axis of rotation and freely rotatably relative to each other, each thereof having at least one radial gap of an outwardly decreasing cross-section through which a cambered belt passes.

## Revendications

1. Transmission comportant au moins un corps (9, 10, 11; 9, 10, 11, 9', 10', 11') susceptible de tourner autour d'un axe de rotation (12), et présentant une fente radiale (7; 7, 7') qui s'étend au moins sur une partie de la périphérie du corps (9, 10, 11; 9, 10, 11, 9', 10', 11'), dont la section transversale se rétrécit vers l'extérieur en s'éloignant de l'axe de rotation (12), et au moins une bande (1; 1') bombée transversalement à sa direction longitudinale, réalisée en un matériau rigide, déformable de manière élastique, transmission dans laquelle, pour la transformation d'un mouvement de rotation du corps susceptible de tourner (9, 10, 11; 9, 10, 11, 9', 10', 11') en un mouvement de translation de la bande bombée (1; 1') s'effectuant relativement par rapport à ce corps (9, 10, 11; 9, 10, 11, 9', 10', 11') ou inversement, des tronçons successifs de la bande bombée (1; 1') pénètrent dans la fente radiale (7; 7, 7'), sur une plage angulaire pouvant être prédéfinie, et dans laquelle la bande bombée (1; 1') est guidée de manière à subir un changement de direction, les surfaces latérales (14, 15) des tronçons de la bande bombée étant en appui avec adhérence aux parois latérales (17, 19) de la fente radiale (7; 7, 7') pour la transmission des efforts, et quittant ensuite à nouveau la fente radiale (7; 7, 7'), caractérisée en ce qu'au moins la partie de la bande bombée (1; 1') à déplacer chaque fois sur la fente radiale (7; 7, 7') est constamment sollicitée par pression dans la direction longitudinale vers la fente radiale (7; 7, 7'), et en ce que l'étendue axiale de la fente radiale (7; 7, 7') est réglable.

2. Transmission selon la revendication 1, caractérisée en ce que la tangente de l'angle (α) oui définit l'inclinaison de chacune des parois latérales (17, 18) de la fente radiale (7; 7, 7') par rapport à la normale (19, 20) à l'axe de rotation (12) du corps (11; 11, 11') susceptible de tourner, est plus petite comparée au coefficient de frottement du couple frottant entre les parois latérales (14, 15) de la bande bombée (1; 1, 1') et les parois latérales (17, 18) de la fente radiale (7; 7, 7').

3. Transmission selon la revendication 1 ou 2, caractérisée en ce que l'étendue axiale de la fente radiale (7; 7, 7') est réglable pendant le fonctionnement de l'agencement.

4. Transmission selon l'une des revendications précédentes, caractérisée en ce que la largeur de la bande bombée (1; 1') varie le long de la longueur de celle-ci.

5. Transmission selon l'une des revendications précédentes, caractérisée en ce que la fente radiale (7; 7, 7') est limitée par deux disques (9, 10; 9', 10').

6. Transmission selon la revendication 5, caractérisée en ce que les deux disques peuvent tourner autour de deux axes qui ne sont pas alignés l'un avec l'autre.

7. Transmission selon la revendication 5 ou 6, caractérisée en ce que l'un des deux disques (9, 10; 9', 10') est monté librement tournant par rapport à l'autre.

8. Transmission selon l'une des revendications précédentes caractérisée en ce que la bande bombée (1') est fermée en constituant une boucle sans fin.

9. Transmission selon la revendication 8, caractérisée en ce que la boucle sans fin présente une forme allongée comportant deux zones de renvoi (24, 25) et un brin supérieur (22) ainsi qu'un brin inférieur (23), qui relient entre-elles les deux zones de renvoi.

10. Transmission selon la revendication 9, caractérisée en ce que la bande bombée (1') traverse dans chacune des zones de renvoi (24, 25), une fente radiale (7, 7'), dont la section transversale se rétrécit vers l'extérieur en s'éloignant de l'axe de l'arbre (11, 11') associé.

11. Transmission selon la revendication 10, caractérisée en ce que la distance entre les arbres (11, 11') constituant chaque fois le centre de chacune des zones de renvoi (24, 25), est réglable pendant le fonctionnement.

12. Transmission selon la revendication 10 ou 11, caractérisée en ce que les étendues axiales des fentes radiales (7, 7') sont réglables de façon coordonnée, pendant le fonctionnement.

13. Transmission selon l'une des revendications précédentes, caractérisée en ce que plusieurs bandes bombées traversent la même et unique fente radiale sur différents rayons.

14. Transmission selon l'une des revendications précédentes, caractérisée en ce que la fente radiale (7; 7, 7') présente une section transversale se rétrécissant de manière conique vers l'extérieur.

15. Transmission selon la revendication 13, caractérisée en ce que l'allure de l'étendue axiale de la fente radiale et les largeurs des bandes bombées sont accordées de manière à ce que les bandes présentent toutes le même rapport de conversion.

16. Transmission selon l'une des revendications précédentes, caractérisée en ce qu'au moins deux corps susceptibles de tourner sont disposés concentriquement par rapport à un axe de rotation commun et sont librement tournants l'un par rapport à l'autre, desquels chacun présente au moins une fente radiale de section transversale se rétrécissant vers l'extérieur, qui est traversée par une bande bombée.
